# EUROPÄISCHE PATENTANMELDUNG

(11) **EP 1 847 442 A2**
(43) Veröffentlichungstag der Anmeldung: **24.10.2007**
(21) Anmeldenummer: 07106005.7
(22) Anmeldetag: 12.04.2007
(51) Int. Cl.: B62D 13/00

(54) **Verfahren zur Folgeführung eines Fahrzeugwagens in einem Fahrzeuggespann**

(30) Priorität: 20.04.2006 DE 102006018389
(71) Anmelder: ZF Lenksysteme GmbH, 73527 Schwäbisch Gmünd (DE)
(72) Erfinder: Neitzel, Karl-Ernst, Dr., 73527, Schwäbisch Gmünd (DE)

(57) **Zusammenfassung**

Es wird ein Verfahren zur Führung eines Fahrzeuggespanns vorgeschlagen, bei dem nach Maßgabe eines die Bewegungsrichtung eines Bezugspunktes (L) beschreibenden Bewegungsrichtungsvektors (*̅r̅*̅(*t*)) eines Fahrzeugwagens ein Radlenkwinkel als Sollvorgabe für einen Lenkaktuator eines nachfolgenden Fahrzeugwagens (2a, 2b) bestimmt wird, wobei der Bezugspunkt (L) entsprechend einer fahrsituationsabhängigen Regel veränderbar und festlegbar ist.

## Beschreibung

Die Erfindung betrifft ein Verfahren zur Folgeführung eines Fahrzeugwagens in einem Fahrzeuggespann gemäß dem Oberbegriff des Anspruchs 1.
Die Erfindung betrifft auch eine Mehrachslenkungsanlage die nach dem erfindungsgemäßen Verfahren betrieben wird.

Die DE 195 10 208 A1 beschreibt eine Mehrachslenkungsanlage, bei der der erste Lenkaktuator ein hydraulisches Hauptlenkungsaggregat und der zweite Lenkaktuator ein hydraulisches Hilfslenkungsaggregat umfasst, wobei das Hilfslenkungsaggregat als Nehmerzylinder ausgebildet ist, der mit einem Geberzylinder der ersten Lenkungsanlage über eine hydrostatische Lenkkraftübertragungseinrichtung gekoppelt ist. Hauptlenkungsaggregat und Hilfslenkungsaggregat dienen zur Kraftunterstützung der vom Fahrer über die Lenkhandhabe initiierten Lenkbewegung. Eine Lenkbewegung am Lenkrad erzeugt eine Lenkbewegung oder Lenkwinkel am ersten Lenkaktuator, welche über die hydraulische Kopplung eine Lenkbewegung der des zweiten Lenkaktuators erzwingt. Bei den bekannten Mehrachslenkungsanlagen müssen die Längen der Radlenkhebel und der Lenkschubstangen so gewählt werden, dass die Radeinschlagwinkel der Ackermanngeometrie folgen, die gedachten Verlängerungen der Fahrzeugachsen sich also in einem gemeinsamen Momentanpol schneiden. Dies ist zweckmäßig, um den Reifenverschleiß so gering wie möglich zu halten und ein gutes Einlenkverhalten zu erzielen. In der Praxis werden jedoch Fahrzeuge derselben Grundbauart mit unterschiedlichen Radständen gebaut. Um der Ackermanngeometrie zu folgen, müssen für Fahrzeuge mit unterschiedlichen Radständen auch unterschiedlich bemessene Lenkschubstangen und Radlenkhebel vorgesehen werden. Hierauf wird jedoch häufig aus Kostengründen verzichtet und ein Fehler in der Ackermanngeometrie mit negativen Auswirkungen auf den Reifenverschleiß und das Einlenkverhalten in Kauf genommen.

Straßenfahrzeuge, beispielsweise ein Fahrzeuggespann, das aus mehreren Fahrzeugwagen besteht, beispielsweise aus einer Zugmaschine, einem Sattelschlepper oder einem Personenkraftwagen oder dem ersten Fahrzeugwagen eines ein- oder mehrgelenkigen Omnibusses und wenigstens einem weiteren Fahrzeugwagen, beispielsweise einem Anhänger oder Auflieger oder einem weiteren Wagenteil eines mehrgelenkigen Omnibusses, die mittels einer Einrichtung zur Koppelung, beispielsweise einem Drehteller, einer Anhängerkupplung oder einem Knickgelenk miteinander verbunden sind, besitzen keine Fahrzeugführung hinsichtlich des Nachlaufverhaltens nachfolgender Fahrzeugwagen in Bezug auf ein Führungsfahrzeug des Fahrzeuggespanns.

Aus dem Stand der Technik sind zudem Lösungen zur Spurhaltung und Spurführung bekannt. Das in der Offenlegungsschrift DE 103 164 13 offenbarte Verfahren zur Spurführung eines Fahrzeugs sieht eine Erkennung seitlich angeordneter Spurbegrenzungsmarkierungen vor. In Folge daraus wird die Bewegungsrichtung des Fahrzeugs ausgewertet und eine Korrektur der Fahrzeugbewegungsrichtung an einem der Fahrzeugräder durch einen Bremseingriff durchgeführt.

Des weiteren ist aus der DE 103 12 513 A1 bekannt, die Position eines Fahrzeugs relativ zu einer Fahrspur mithilfe einer Einrichtung zu Lageerkennung zu ermitteln und zur Bestimmung eines Soll-Lenkwinkels einem Fahrspurregler zuzuführen, welcher ein Fahrer-Lenkmoment entsprechend des vorgegebenen Soll-Lenkwinkels mit einem Soll-Lenkmoment überlagert und einem die lenkbaren Räder beaufschlagenden Lenkaktuator zuführt.

Der Erfindung liegt die Aufgabe zugrunde, ein Verfahren für die Folgeführung von Fahrzeugwagen in einem Fahrzeuggespann anzugeben, welches es ermöglicht, dass die einzelnen Fahrzeugwagen eines Fahrzeuggespanns der durch ein Führungsfahrzeug vorgegebenen Fahrbewegung während einer Vorwärtsfahrt besser nachfolgen können.

Des Weiteren liegt der Erfindung die Aufgabe zugrunde, ein zur Durchführung des erfindungsgemäßen Verfahrens geeignete Mehrachslenkungsanlage in einem Fahrzeuggespann anzugeben.

Die Aufgabe wird verfahrensgemäß mit den kennzeichnenden Merkmalen des Anspruchs 1 gelöst. Vorteilhafte Ausgestaltungen der Erfindung sind in den abhängigen Ansprüchen angegeben.
Die einrichtungsgemäße Lösung der Aufgabe wird mit den Merkmalen des Anspruchs 9 gelöst.

Erfindungsgemäß ist in einem Verfahren zur Führung eines Fahrzeuggespanns vorgesehen, dass nach Maßgabe eines die Bewegungsrichtung eines Bezugspunktes L beschreibenden Bewegungsrichtungsvektors (*̅r̅*̅(*t*)) eines Fahrzeugwagens einen Radlenkwinkel β als Sollvorgabe für einen Lenkaktuator eines nachfolgenden Fahrzeugwagens (2a, 2b) bestimmt wird, wobei der Bezugspunkt (L) entsprechend einer fahrsituationsabhängigen Regel veränderbar und festlegbar ist.

Die Regel berücksichtigt dabei physikalisch messbare Größen wie beispielsweise die Fahrzeuggeschwindigkeit, Beschleunigungs- und Verzögerungswerte oder sonstige Größen zu Beschreibung des aktuellen fahrzeugdynamischen Zustands. In einer besonders einfachen Ausführungsform wird der Bezugspunkt L anhand der festgelegten geometrischen Größen des Führungsfahrzeuges, beispielsweise der Rad- und Achsabstände bestimmt.

Eine Weiterentwicklung sieht vor, den Bezugspunk L unter Verwendung von Koordinatendaten aus einer Einheit zur satellitengestützten Standortbestimmung, einem GPS System, welches an einem festen Ort des Fahrzeugwagens angeordnet ist, zu bestimmen. Zur Erhöhung der Genauigkeit der zeitabhängigen Weginformation und letztendlich des die Bewegungsrichtung beschreibenden Vektors (*̅r̅*̅(t)) ist es vorteilhaft, Radumdrehungszahlen und weitere fahrzeugdynamische Größen zur Bestimmung des Bezugspunktes zu verwenden.

Eine weitere Ausgestaltung der Erfindung sieht vor, dass die Bestimmung des Radlenkwinkels β zusätzlich in Abhängigkeit einer ersten oder zweiten Ableitung des Bewegungsrichtungsvektors (*̅r̅*̅(t)) nach der Zeit erfolgt und dass der Bewegungsrichtungsvektor oder ein davon abgeleiteter Vektor oder Größe eine zeitliche Verzögerung um einen Wert T entsprechend einer zu Grunde gelegten Beziehung β(*t*)*= f*(*̅r̅*̅(*t*-*T*)) erhält.

Die vorteilhafte Wirkung bei Anwendung des erfindungsgemäßen Verfahrens wird beim Durchfahren einer kurvenartigen Fahrstrecke, insbesondere einer Fahrstrecke, welche aus auf einander folgende konvex und konkav- gebogenen und/oder dazwischen liegenden oder voran- oder nachgestellten geradlinigen Streckenabschnitten besteht, erreicht: Die Folgepunkte P1, P2, bewegen sich weitestgehend auf der Trajektorie K.

In einer weiteren, besonders vorteilhaften Ausgestaltung der Erfindung ist vorgesehen, dass eine variable Bestimmung des Wertes T in Abhängigkeit der momentanen Fahrgeschwindigkeit des Fahrzeuggespanns oder eines Fahrzeugwagens erfolgt. Der Bezugspunkt L kann dabei auch im Bereich eines Gelenkes liegen.

In einer vorrichtungsgemäßen Ausgestaltung ist gemäß des Anspruchs 8 vorgesehen, eine Mehrachslenkungsanlage in einem aus mehreren Fahrzeugwagen bestehenden und mittels Gelenke verbundenen Fahrzeuggespann zur Folgeführung der Fahrzeugwagen nach dem erfindungsgemäßen Verfahren zu betreiben.

Ist ein Fahrzeuggespann mit einer Mehrachslenkungsanlage ausgerüstet, die mit dem erfindungsgemäßen Verfahren betrieben wird, wird beim Durchfahren einer kurvenartigen Fahrstrecke, insbesondere einer Fahrstrecke, welche aus auf einander folgende konvex oder konkavgebogenen oder geradlinigen Streckenabschnitten besteht, der Raumbedarf des Fahrzeuggespanns zumindest drastisch reduziert und im Idealfall minimiert.
Durch das erfindungsgemäße Verfahren wird zusätzlich die Fahrsicherheit des Fahrzeuggespanns erhöht, da der Führer des Fahrzeuggespanns davon ausgehen kann, dass keiner der nachfolgenden Fahrzeugwagen die "Kurve schneidet" und damit Personen- und/oder Sachschäden vermieden werden können. Dies ist besonders relevant hinsichtlich der Tatsache, dass der durch die Rückspiegel des Führungsfahrzeugs observierbare Raum nachfolgende Fahrzeugwagen in Kurven unzureichend erfassen kann.

Weitere Einzelheiten und Vorteile der Erfindung ergeben sich aus den nachfolgenden Figurenbeschreibungen und den beigefügten Zeichnungen.
Es zeigen
Fig. 1 eine schematische Darstellung einer Mehrachslenkungsanlage in einem Fahrzeuggespann am Beispiel eines Mehrgelenkomnibusses.
Fig. 2 eine schematische Darstellung zur Veranschaulichung des erfindungsgemäßen Verfahrens am Beispiel eines Mehrgelenkomnibusses.

Bezugszeichenliste

**Tabelle 1**

| | |
|---|---|
| 1 | Fahrzeuggespann |
| 2a, 2b, 2c | Fahrzeugwagen |
| 3a, 3b, 3c | Lenkaktuator |
| 4 | Lenkwinkelsensor |
| 5a, 5b | Knickwinkelsensor |
| 6 | Lenkachse |
| 7a, 7b | Gelenk |
| 8a, 8b, 8c | Steuereinheit |
| 9, 10 | Signalverbindung |
| 11 | Gelenkte Räder |
| αi, αa | Lenkwinkel, (innerer, äußerer) |
| β1a, β1i, β2a, β2i | Radlenkwinkel (innerer, äußerer) |
| ω1, ω2 | Knickwinkel |
| LCS | Koordinatensystem, lokal |
| GCS | Koordinatensystem, global |
| L | Bezugspunkt |
| P1, P2 | Folgepunkte |
| K | Trajektorie |
| r | Vektor, bewegungsrichtungsbeschreibend |
| *v* | Vektor, geschwindigkeitsbeschreibend |

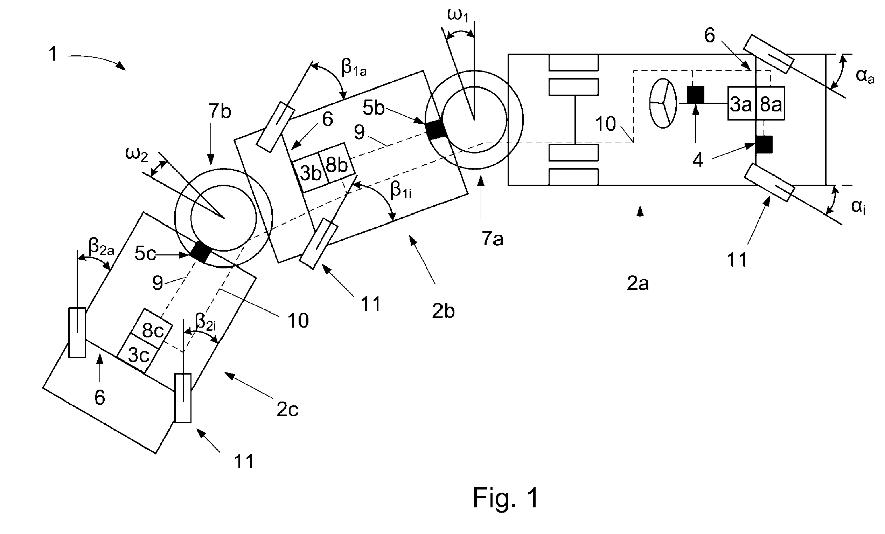

In Figur 1 ist schematisch eine Mehrachslenkungsanlage für ein Fahrzeuggespann 1 am Beispiel eines Gelenkomnibusses dargestellt. Der Gelenkomnibus besteht aus den Fahrzeugwagen 2a, 2b, 2c die mittels Drehtellern 7a und 7b miteinander verbunden sind. An den Knickgelenken 7a, 7b sind Knickwinkelsensoren 5a, 5b angeordnet. Sie dienen zur Erfassung des Knickwinkels (ω1, ω2) zwischen zwei Fahrzeugwagen 2a, 2b oder 2b, 2c. So erfasst der Knickwinkelsensor 5a den Winkel zwischen den Fahrzeugwagen 2a und 2b. Jeder Fahrzeugwagen weist eine Lenkachse 6 zur Radwinkelverstellung der mit den Lenkachsen verbunden Räder 11 einer lenkbaren Achse auf. Jeder Lenkachse 6 ist jeweils ein Lenkaktuator 3a, 3b, 3c zugeordnet. In diesem Beispiel ist der Lenkaktuator 3a als eine aus dem Stand der Technik bekannte Kugelmutter-Hydrolenkung ausgebildet. Die Lenkaktuatoren 3b und 3c sind als hydraulisch- pneumatisches Hinterachslenksystem ausgeführt. Jedem Lenkaktuator 3a, 3b, 3c ist eine Steuereinheit 8 zugeordnet. Aufgabe der Steuereinheit ist es, Informationen über den momentanen Fahrzeugzustand zu einzusammeln und zu bewerten und nach Maßgabe derer eine Sollvorgabe für die einzelnen Lenkaktuator und damit den Radlenkwinkeln β1a, β1i, β2a, β2i der mit den jeweiligen Lenkachsen 6 verbundenen gelenkten Rädern 11 zu ermitteln. Mittels den Signalverbindungen 9 ist die Datenübertragung der Knickwinkelinformation aus den Knickwinkelsensoren zur der Steuereinheiten 8 möglich. Ferner ist eine Signalverbindungsleitung 10 vorgesehen, die die Steuereinheiten untereinander verbindet. Dies ermöglicht einen Informationsaustausch der beteiligten Steuereinheiten untereinander. Die Signalverbindungen 9 und 10 sind bevorzugt als Bussystem ausgeführt, beispielsweise als CAN, MOST oder Flexray. Es können jedoch auch andere Überragungstechniken eingesetzt werden, z.B. drahtlose Verbindungen.

So kann die momentane Fahrgeschwindigkeitsinformation, die Informationen über die Achslasten und die Knickwinkel- und Lenkwinkelinformation, die aus den Knickwinkelsensoren 5a, 5b und den Lenkwinkelsensoren 4 stammen, zwischen den Steuereinheiten 8 ausgetauscht werden.

Anhand des im Folgenden erläuterten Verfahrens wird beispielhaft die erfindungsgemäße Lösung der Aufgabestellung beschrieben.

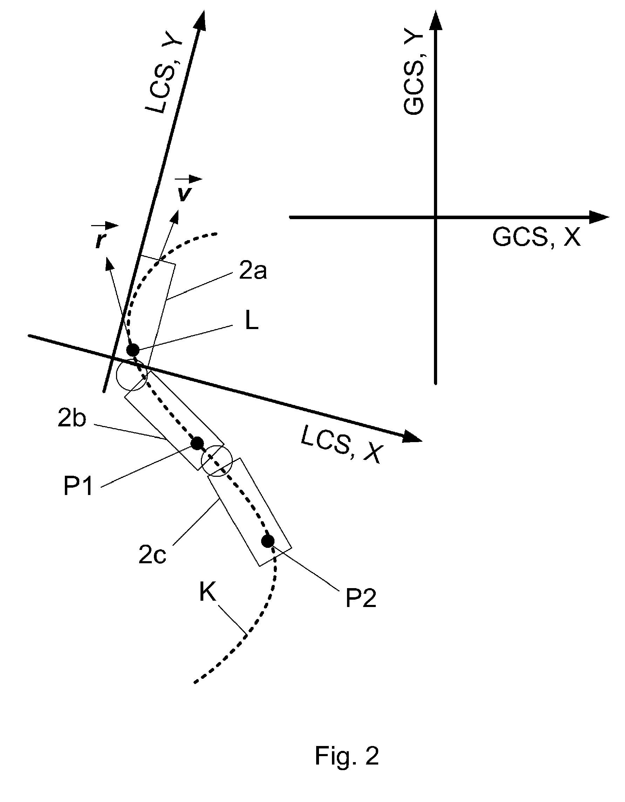

In der Figur 2 ist ein Fahrzeuggespann mit drei Fahrzeugwagen 2a, 2b, 2c dargestellt die sich relativ zu einem ersten, globalen Koordinatensystem GCS bewegen. Die Fahrzeugwagen sind mittels Gelenke verkoppelt. Der erste Fahrzeugwagen 2a ist dabei das Führungsfahrzeug des Fahrzeuggespanns. Der Fahrer des Führungsfahrzeuges leitet mittels einer Lenkhandhabe eine Lenkbewegung in das Führungsfahrzeug ein, die bei einer Vorwärtsfahrt einen Bewegungsrichtungsvektor r an einem Bezugspunkt L erzeugt. Der Bezugspunkt L stellt dabei einen Punkt in einem lokalen, fahrzeugwagenbezogenen Koordinatensystem LCS dar und beschreibt bei Vorwärtsfahrt des Führungsfahrzeuges eine Trajektorie K in einem zweiten, ortsfesten globalen Koordinatensystem GCS. Der Radlenkwinkel an einer lenkbaren Achse eines der nachfolgenden Fahrzeugwagen wird in Abhängigkeit des Bewegungsrichtungsvektors r am Bezugspunkt L mit einer Zeitverzögerung T gestellt. Damit wird erreicht, dass zumindest einer der Folgepunkte P1, P2 der dem Führungsfahrzeug folgenden Fahrzeugwagen der durch eine Bewegung des Bezugspunkt L vorgegebenen Trajektorie K folgt.

## Patentansprüche

1. Verfahren zur Führung eines Fahrzeuggespanns,
**dadurch gekennzeichnet, dass** nach Maßgabe eines die Bewegungsrichtung eines Bezugspunktes (L) beschreibenden Bewegungsrichtungsvektors (*̅r̅*̅(t)) eines Fahrzeugwagens einen Radlenkwinkel als Sollvorgabe für einen Lenkaktuator eines nachfolgenden Fahrzeugwagens (2a, 2b) bestimmt wird, wobei der Bezugspunkt (L) entsprechend einer fahrsituationsabhängigen Regel veränderbar und festlegbar ist.

2. Verfahren nach Anspruch 1, **dadurch gekennzeichnet, dass** der Bezugspunkt L unter Verwendung von Koordinateninformation eines GPS-Empfängers bestimmt wird.

3. Verfahren nach Anspruch 1 oder 2, **dadurch gekennzeichnet, dass** die Bestimmung des Radlenkwinkels zusätzlich in Abhängigkeit einer ersten oder zweiten Ableitung des Bewegungsrichtungsvektors (*̅r̅*̅(t)) nach der Zeit erfolgt.

4. Verfahren nach Anspruch 1, 2 oder 3, **dadurch gekennzeichnet, dass** der Bewegungsrichtungsvektor oder ein davon abgeleiteter Vektor oder Größe eine zeitliche Verzögerung um einen Wert T entsprechend einer zu Grunde gelegten Beziehung β(*t*) = *f*(*̅r̅*̅(*t*-*T*)) erhält.

5. Verfahren nach Anspruch 4, **dadurch gekennzeichnet, dass** eine variable Bestimmung des Wertes T in Abhängigkeit der momentanen Fahrgeschwindigkeit des Fahrzeuggespanns oder eines Fahrzeugwagens erfolgt.

6. Computerprogramm, **dadurch gekennzeichnet, dass** es zur Durchführung eines Verfahrens nach einem der vorstehenden Ansprüchen geeignet ist.

7. Computerprogramm nach Anspruch 5, **dadurch gekennzeichnet, dass** es auf einem Speichermedium abgespeichert ist.

8. Steuergerät zum Steuern einer Mehrachslenkungsanlage, **dadurch gekennzeichnet, dass** das Steuergerät nach einem Verfahren nach einem der Ansprüche 1 bis 4 arbeitet.

9. Mehrachslenkungsanlage mit
- wenigstens zwei Fahrzeugwagen (2a, 2b), (2b, 2c)
- wenigstens einem Gelenk (7a, 7b) zur Verkoppelung zweier Fahrzeugwagen wobei wenigstens zwei Fahrzeugwagen jeweils eine Lenkachse (6) zur Radwinkelverstellung von mit der Lenkachse (6) in Wirkverbindung stehenden gelenkten Räder (11) aufweisen, und
- jeder Lenkachse (6) ein Lenkaktuator (3a, 3b, 3c) zur Radwinkelverstellung und eine Steuereinheit (8a, 8b, 8c) zur Steuerung und/oder Regelung der Lenkaktuatoren (3a, 3b, 3c) zugeordnet ist, und
- Mittel zur Erfassung eines vom Führer des Fahrzeuggespanns beeinflussbaren Lenkwinkels (αi, αa) und/oder Mittel zur Erfassung eines Knickwinkels (ω1, ω2) zwischen zwei Fahrzeugwagen (2a, 2b), (2b, 2c)
- Mittel zur Zuführung einer Lenkwinkelinformation und/oder einer Knickwinkelinformation an eine Steuereinheit (8a, 8b, 8c), wobei die Bestimmung einer Sollvorgabe für die Radlenkwinkel (β1a, β1i), (β2a, β2i), der Soll-Radlenkwinkel, für die mit einer Lenkachse verbundenen gelenkten Räder in einer Steuereinheit erfolgt und/oder einer Steuereinheit zugeführt wird und nach deren Maßgabe eine dem Soll- Radlenkwinkel (β1a, β1i), (β2a, β2i) entsprechende Stellgröße ermittelt und einem einer Lenkachse (6) zugeordneten Lenkaktuator (3a, 3b) zugeführt wird, **dadurch gekennzeichnet, dass** die Bestimmung des Soll-Radlenkwinkels nach einem der in den vorstehenden Ansprüchen beanspruchten Verfahren 1 bis 5 erfolgt.
